# EUROPEAN PATENT APPLICATION

(11) **EP 4 570 708 A1**
(43) Date of publication of application: **18.06.2025**
(21) Application number: 24218548.6
(22) Date of filing: 10.12.2024
(51) Int. Cl.: B65G 1/04, B65G 1/06

(54) **AN UNMANNED SHUTTLE AND A METHOD FOR LOAD HANDLING IN A WAREHOUSE**

(30) Priority: 15.12.2023 US 202363610765 P
(71) Applicant: Cleveron AS, 71020 Viljandi (EE)
(72) Inventor: Must, Tarmo, Viljandi (EE); Ilves, Jonar, Viljandi (EE); Leib, Mart, Viljandi (EE); Binsol, Rainer, Viljandi (EE)
(74) Representative: Koitel, Raivo

(57) **Abstract**

An unmanned warehouse shuttle with telescopic arms capable of handling various sizes of packages and moving them fast and stably on rails within a warehouse system. The system provides flexibility in that a distance between the side compartments is adjustable and that the distance between the arms is adjustable. A unique extension system for the extendable arms is disclosed where the arms comprise two parts and are configured to extend and provide an extension length that is more than twice the depth of the platform of the shuttle.

## Description

### FIELD OF INVENTION

This invention relates to load handling systems, especially in a warehouse setting, even more specifically to unmanned warehouse shuttle with telescopic arms.

### BACKGROUND OF THE INVENTION

There is a large number of disclosures for various kinds of load handling systems in a warehouse setting. A general feature of the disclosed system includes a shuttle device moving between the warehouse shelves and reaching to pick packages, or items from the shelf to transport the package or items to a destination. A problem that many of the disclosures address is either how to load more than one package onto the shuttle at the very same time, or how to enable picking packages of different sizes onto the shuttle.

A few examples of solutions how to adjust the distance between gripping arms and the width of the loading area of a shuttle device are:
US 10,414,587 discloses a transporting apparatus for a single-level rack having a first and a second chassis each having an extendable arm, and a storage region between the chassis halves. The storage region can be varied by varying the spacing between the arm together with lateral supporting plates.

US 10,850,42 discloses a device for gripping a load by gripping arms, and the width between the arms is varied by locking one chassis half and actuating movement of the other chassis half.

A mechanism of extending the gripping arms is addressed for example in the following publications:
US 10,894,663 discloses an automated storage retrieval system where telescopic arm assemblies include movable pusher elements and linearly moving tabs on the arms so as to change a distance between the tab and a finger to fit items of different size on the system. The telescopic arm is constructed to have multiple layers of extending and retracting members sliding in series within each other via belt and pulley arrangement in each of the telescoping members.

US 9,522,781 discloses a device for gripping a load, wherein the system has chassis elements that are moving in relation to each other so as to change the width between gripping arms that are attached to the chassis portions and that way adopt to loading items of different widths. Drive assemblies including a rotatable drum and a cable extend and retract the telescopic arms.

In US 18/218,376 the Applicant of the current application discloses a telescopic arm assembly for a warehouse shuttle, where the arms comprise three parts of equal length and where the first part is stationary while the two parts are configured to extend. The second part extends almost half of its length over an edge of the platform between the arms and the third part extends more than half of its length over the distal end of the second part. The system thus allows telescopic arms that have an extension length more than twice of the depth of the platform. The extension of the arms functions via multiple pinions and toothed racks.

Thus, there are solutions providing various mechanisms for warehouse shuttles having adjustable width and gripping arms for reaching to different depths in the warehouse shelf. Due to the fact that automated warehouses are getting more and more popular, there is also a need for shuttles having simpler and more stable structures while not compromising the ability of adjust the width of the platform between the arms and the extension length of the arms.

### SUMMARY OF THE INVENTION

The current disclosure therefore provides a shuttle having an adjustable width of the loading area between extendable arms that comprise two extendable parts that allow the arms to extend more than twice the width of the platform, and wherein the mechanism of the extension is simple and steady and the arms require no movable levers to move the crate, thereby ensuring less problems in the operation and less elements that would need to have service or which would need to be changed.

Accordingly, it is an object of this invention to provide an unmanned shuttle for automated warehouse systems configured to move along warehouse rail, the shuttle comprising:
a first and a second side compartment (102), each having at least an inner wall (102a) and two end walls (102b),
   the first side compartment being a motor comprising compartment and housing an arms drive motor (201), a compartment drive motor (214), and a wheel drive motor (104),
      the first and the second side compartments being attached to each other via a splined shaft (202) having a first end connected to the compartment drive motor (214) via a fixed chain sprocket (217) attached to a first obround chain guide (206) attached to a bottom part of the inner wall (102a) of the first side compartment (102), and a second end connected to a splined hub attached to a sliding chain sprocket (205) attached to a second obround chain guide (206) attached to a bottom part of the inner wall of the second side compartment, wherein the splined shaft (202) is configured to be rotated by the compartment drive motor (214) and the sliding chain sprocket (205) is configured to simultaneously slide along the splined shaft, while the fixed chain sprocket (217) at the other end of the splined shaft is configured to turn but not slide;
   the inner wall of each side compartment comprising a stationary horizontal toothed rack (208);
two telescopic arms (200) configured to extend in synchrony to two opposite directions;
   each telescopic arm comprising a first part (203) and a second part (204),
   the first part comprising a toothed rack (207) along its lower edge and an obround chain drive system (209) mounted on its upper edge at a middle of the length of the first part, said toothed rack being in contact with the first or the second obround chain guide (206) attached onto the bottom part of the inner wall of the first or second side compartment respectively, and the first part being configured to extend upon moving the chain around the chain guide (206) via turning the splined shaft (202), the second part (204) comprising a toothed rack on its upper edge and the toothed rack (218) being in contact with the obround chain system (209) on the upper edge of the first part, and the second part configured to extend upon moving a chain around the chain guide of the obround chain system (209) upon extending movement of the first part,
wherein at least one of the side compartments comprises a horizontal inward extending crate guide surface (112) configured to provide support for a crate (111) positioned on a loading space (106) between the first and second side compartments (102),
wherein a distance between the first and second side compartments is adjustable via a ball or trapezoidal screw (210) connecting the compartments to each other, and the ball or trapezoidal screw configured to be turned by the compartment drive motor (214),
and wherein the shuttle (100) has at least one wheel (103) in each end wall (102b) of the first and the second compartments (102) and the wheels of the first compartment are connected with a driveshaft (105) and the driveshaft is driven by the wheel drive motor (104) with a belt (108) housed inside the first side compartment.

Another object of the invention is to provide a method to transport and store parcels of different sized in an automated warehouse system wherein the method comprises providing the shuttle system as describe above, and depending on the size of a parcel to be retrieved by the telescopic arms and transported on the shuttle, the distance between the telescopic arms is adjusted by moving the side compartments closer or further away from each other via the compartment drive motor turning the ball or trapezoidal screw, and by adjusting the extension length of the telescopic arms by the arms drive motor controlling rotation of the splined shaft and thereby extending movement of the first part of the telescopic arms which causes extending movement of the second part.

### BRIEF DESCRIPTION OF THE DRAWINGS

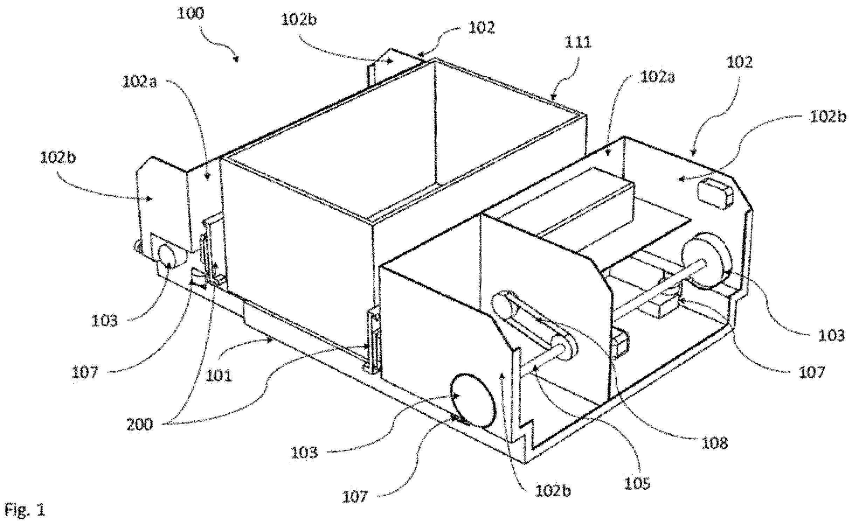

Fig. 1 is a perspective view of a shuttle **100** holding a crate **111.** The figure shows two side compartments **102** and loading area for the crate on platform **101** between the compartments. The crate **111** is on the platform. The figure shows two telescopic arms **200** in retracted position. Support rollers **107** and wheels **103** of the shuttle are shown. Inside of one side compartment there is shown a driveshaft **105,** and a belt **108** for driving the wheels.

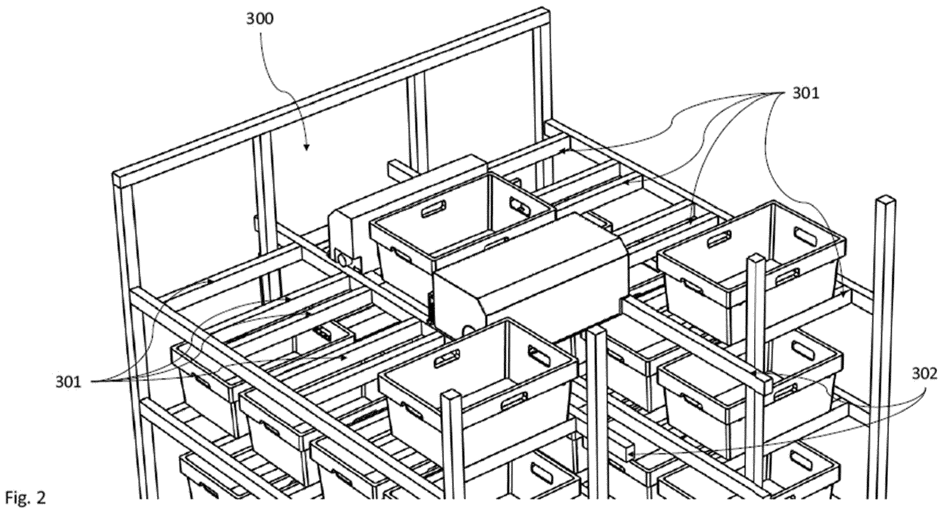

Fig. 2 illustrates shelving structures **301** and aisles **300** of an automated warehouse where the shuttle moves along the rail structures **302** and transports the crates along the aisles and moves the crates on and off the shelving structures.

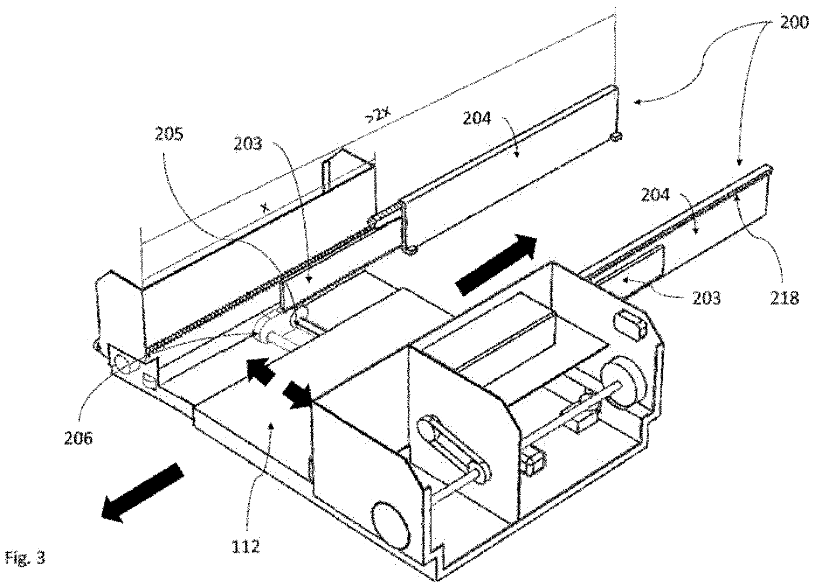

Fig. 3 illustrates movement of the two telescopic arms **200.** The telescopic arms are capable of extending into opposite directions shown with long arrows. The telescopic arms **200** are also configured to move toward and away from each other as shown with the short arrows. The extension length of the telescopic arms **200** is shown in the figure to be more than two times the width of the shuttle (x). The figure shows a sliding chain sprocket **205** and an obround chain guide (second obround guide) **206** that are part of the mechanism of extending/retracting the telescopic arms **200.** The telescopic arms have a first and a second parts **203** and **204,** respectively. The toothed rack **218** of the second part **204** is visible on an upper edge of one of the second part **204** of one of the two telescopic arms in the figure. The toothed rack **218** of the first part **203** is visible in one of the two telescopic arms on the lower edge of the first part.

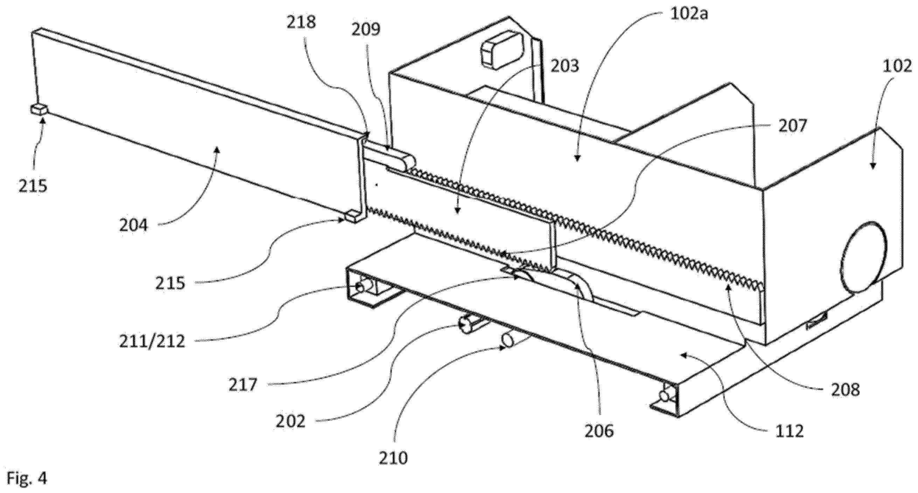

Fig 4 is an illustration of an inner side of a side compartment **102** and the telescopic arm mounted on the compartment. The telescopic arm is shown to have a first part **203** and a second part **204.** The figure shows a horizontal stationary toothed rack **208** mounted onto the inner wall **102a.** Obround chain drive system **209** is mounted on the upper edge of the first part **203** at about its middle. The toothed rack **218** of the second part **204** is on the upper edge of the second part. On the lower edge of the first part **203** there is visible the toothed rack **207** of the first part. Both ends of the second part **204** are shown to have grippers **215** at their lower edges. The figure also shows the crate guide surface **112** attached to the side compartment. Underneath the crate guide surface **112** there is shown a ball screw or trapezoidal screw **210,** and the splined shaft **202.** Obround chain guide (second obround guide) **206** is shown to be in connection with the toothed rack **207** of the first part. A chain sprocket is illustrated as element **217.** The figure further shows the linear bearings **211/212** underneath the crate guide surface **112.**

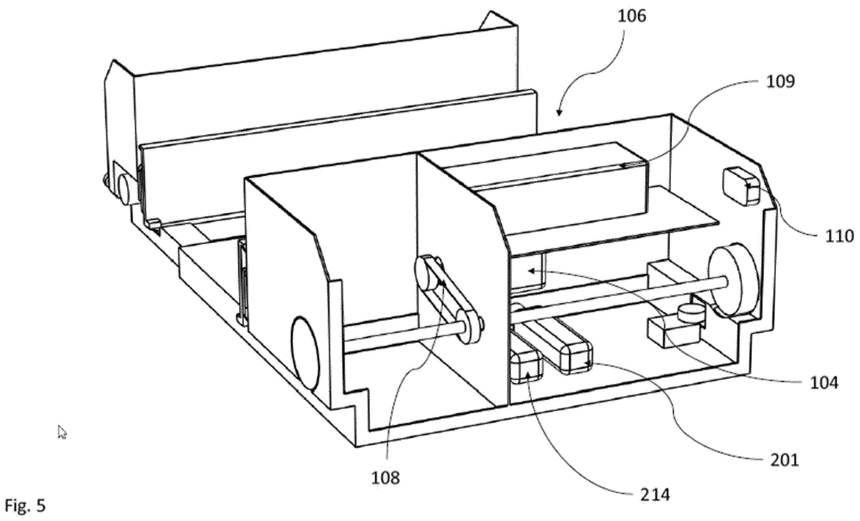

Figure 5 is an illustration showing inside of the motor comprising compartment, only one of the compartments include the motor elements. The figure shows belt **108,** a board energy source **109** and charging interface **110.** The wheel drive motor **104** of the arms is shown as well as the arms drive motor **201** and compartment drive motor **214.** Element **106** illustrates the loading space in between the compartments.

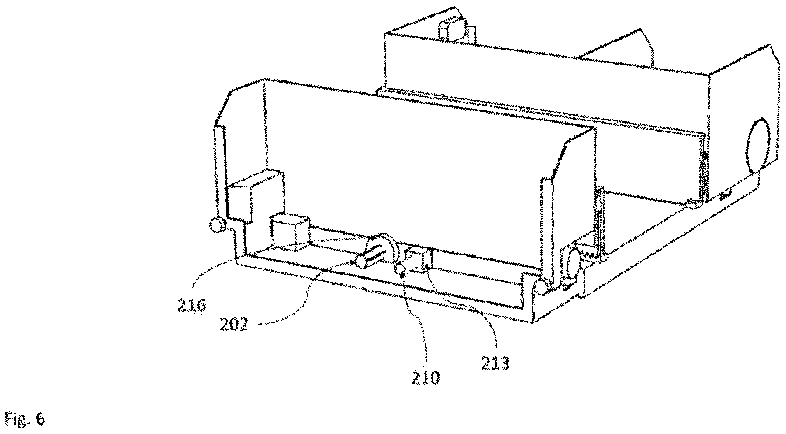

Figure 6 illustrates the inside of the compartment that does not have the motor elements. The figure shows the splined shaft **202** and bearing housing **216** located underneath the crate guide surface **112** (shown in figure 4). The figure shows also a ball or trapezoidal screw **210** and a screw nut **213.**

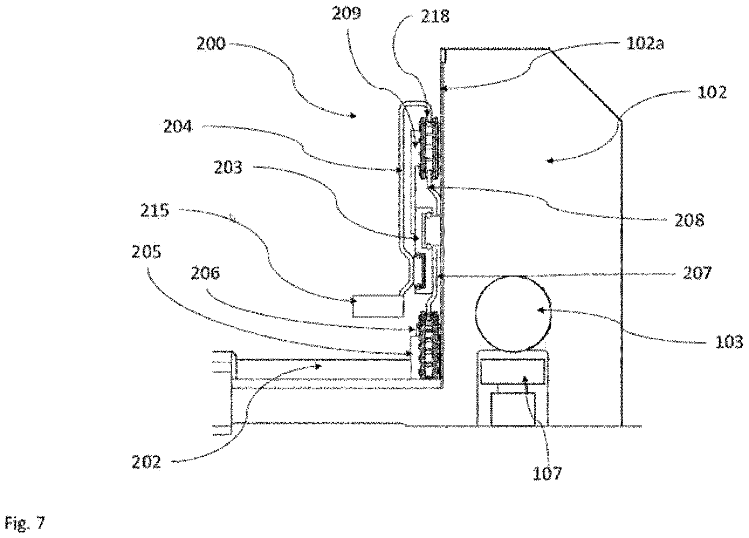

Figure 7 is a side view of a compartment. The figure shows a wheel **103** and a support roller **107** on the side compartment **102.** Splined shaft **202** is shown lengthwise in this figure. Sliding chain sprocket **205** and an obround chain guide (second obround guide) **206** are shown here. A gripper **215** is shown to be mounted on the lower edge at the end of second part **204** of a telescopic arm **200.** Toothed rack **218** of the second part **204** is shown. First part **203** of the arm is shown and a toothed rack of the first part of the arm is shown as **207.** Stationary toothed racks **208** is shown attached to inner wall **102a** of the compartment and an obround chain drive system is shown as **209.**

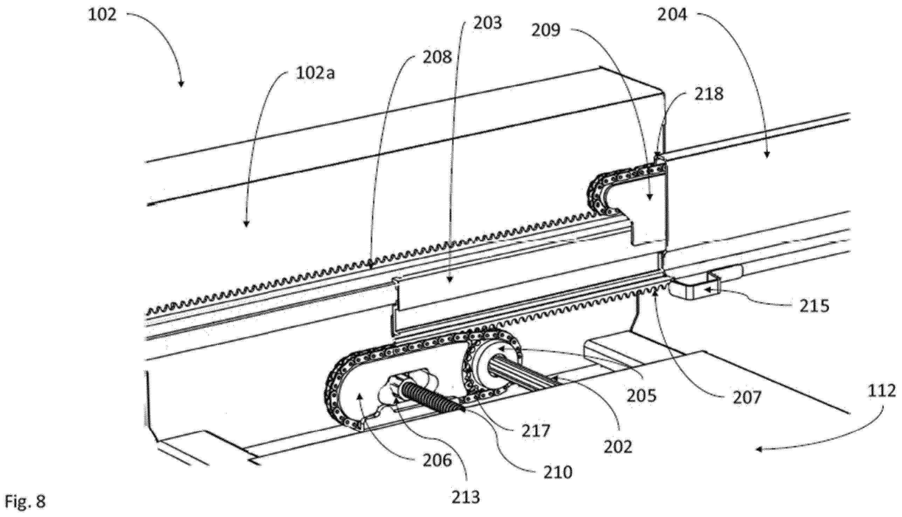

Figure 8 is an even more detailed illustration of an inner side of a side compartment **102** and the telescopic arm mounted on the compartment. Shown is the moving compartment of the shuttle. The telescopic arm is shown to have a first part **203** and a second part **204.** The figure shows a horizontal stationary toothed rack **208** mounted onto the inner wall **102a.** An obround chain drive system **209** is mounted on the upper edge of the first part **203** at about its middle. The toothed rack **218** of the second part **204** is on the upper edge of the second part. On the lower edge of the first part **203** there is visible the toothed rack **207** of the first part. At the end of the second part **204** is shown a gripper **215** at its lower edge. The figure also shows the crate guide surface **112** attached to the side compartment. Obround chain guide (second obround guide) **206** is shown to be in connection with the toothed rack **207** of the first part. A fixed chain sprocket is illustrated as element **217** connected to sliding chain sprocket (205) of a splined hub.

### DETAILED DESCRIPTION OF THE INVENTION

The shuttle of this disclosure comprises platform **101,** two side compartments **102,** two telescopic arms **200** mounted to the side compartments, and a loading space **106** formed in between of the side compartments to load a crate **111.** The shuttle has an even number of wheels **103** such that half of the wheels are on one side and half of them on the other side of the shuttle. The wheels are preferably located on opposite sides of the side compartment **102.** Preferably the shuttle has four wheels, two on each side. At least one of the wheels is driven by a wheel drive motor **104** located inside one of the side compartments, preferably in the motor comprising side compartment the two opposing drive wheels are connected by a driveshaft **105** and the drive shaft is driven by the wheel drive motor **104** with a belt **108.**

The wheels **103** are configured to move the shuttle **100** along an aisle **300** of a warehouse structure between the shelving structures **301** on warehouse rail structures **302.** The rail structures **302** are preferably created by forward protruding horizontal parts of the shelving structures protruding into the aisle between the shelving structures. The wheels **103** are preferably coated with polyurethane or similar wear resistant material.

In addition to the wheels **103,** the shuttle **100** has an even number of support rollers **107** such that two sides of the platform **101** have an equal number of support rollers. The support rollers are preferably located on the platform underneath the wheels. These support rollers have rolling axles that are vertical and their purpose is to limit sideways movement of the shuttle while moving along the warehouse rail structure **302** along the aisle. The support rollers are also providing support during the loading and unloading of crates or items to and from the loading space of the shuttle. The support rollers are in contact with the same rail structure as the wheels **103,** however, the support rollers contact the side of the warehouse rail structure while the wheels contact the top of the warehouse rail structure. Furthermore, the support rollers on one side are mounted on dampeners that keep the shuttle at a constant distance from the rail and smoothen out any deviation in the distance between the rails and keep support rollers on the other side pushed against the rail side.

The shuttle is equipped with two telescopic arms **200.** These arms are located on inner sides of the side compartments such that a loading area is formed in between inner walls **102a** of the side compartments on top of the platform **101.** By the term platform as used in this disclosure, it is meant the flat bottom area that is limited between the outer edges of the side compartments and front and the back edges of the shuttle. The platform may comprise parts of the bottom of the side compartments, and the crate guide surface **112.** The platform has back and front edges beyond which the telescopic arms extend, and the distance between the back and front edges of the platform is referred to as the depth (x, in figure 3) of the platform. By width of the platform, it is meant the distance between the inner walls **102a** of the compartments. The telescopic arms move in synchrony with each other, and they are configured to extend to both directions perpendicularly against the moving direction of the shuttle. Both arms share one arms drive motor **201** which is located inside one of the side compartments (see figure 5). The arms drive motor **201** is connected to a splined shaft **202** (Fig 6, 7) that drives both of the arms and protrudes the inner walls **102a** of the side compartments **102.**

The telescopic arms **200** are configured to extend in two directions such that the extension length of the arms in either direction is more than twice the depth (x) of the platform **101** (i.e. width of the shuttle). In the retracted position the arms have a length equal to the depth of the platform (width of the shuttle), but in fully extended position the length of the arm is more than twice the depth of the platform (width of the shuttle). This invention provides a unique solution to achieve this. This feature provides a system that can reach crates or packages stored deep in a shelving system, as well as very large packages. This feature also allows the shuttle to deposit two or more small packages on same slot in a shelving system; one deeper into the shelving and the other closer to shelf edge. To achieve this overextension, the telescopic arms comprise two parts having equal lengths:
The first part **203** is configured to move almost half of its length over the back and front edges of the platform and the second part **204** is configured to move more than half of its length over the distal end of the first part so that the distal end of the second part is further away from the edge of the platform than the entire length of the second part. The length of each of the first and second part of the arm is preferably the same as the depth of the platform. In order to provide a telescopic arm capable of such overextension, the system requires specific features enabling the extension in a stable manner. The structure and function of the telescopic arms is described below in more detail.

In a preferred embodiment the first **203** and the second **204** part extend towards the shelving structure and crates or packages that are located on the shelving structure **301.** At middle of the compartments under the platform **101** there is a splined shaft **202** that extends from one compartment to another. One end of the shaft is connected to arms drive motor **201** located inside the motor comprising side compartment. The arms drive motor **201** is configured to turn the shaft. The other end of the splined shaft **202** is supported by a splined hub that has a sliding chain sprocket **205** attached to it. In turn this splined hub is mounted to the inner wall of one of the two compartments via a bearing housing **216.** This means that the sliding chain sprocket **205** slides along the splined shaft while rotated by the splined shaft. This is necessary because the distance between the telescopic arms **200** is not constant and the arms are connected to the inner walls **102a** of the compartments. In the other compartment the fixed chain sprocket **217** is fixed to the splined shaft in a way it can turn with the splined shaft, but it cannot move along the splined shaft. In this way the arms can be extended and contracted in any distance between them by only one motor.

The sliding chain sprocket **205** and the fixed chain sprocket **217** drive the chains traveling on the obround chain guide **206** located on the inner wall of each side compartment. In one end of the obround chain guide the chain is driven by the described sprocket and the rest of the way the chain moves along the chain guide.

On the top side of each of the two obround chain guides **206** the chain is in contact with a toothed rack **207** of the first part **203** of the corresponding telescopic arm. Thanks to the obround shape the distal end of the first part can travel past the centreline of the shuttle device.

Also mounted on the inner walls **102a** of the compartments there are stationary toothed racks **208.** These racks are fixedly attached to the sidewalls. In the middle of the first parts **203** of each telescopic arm there is an obround chain drive system **209** similar to the above-described system but without sprockets. A chain travels along the obround guide (preferably plastic). This chain drive system is in contact with the stationary toothed rack **208** from the bottom side that is attached to the side of the compartment and with a toothed rack **218** on the second part **204** from above. As the first part starts to move the chain on the upper chain drive is in contact with the stationary toothed rack **208** and moving toothed rack on the second part **218** so that the second part starts to move at the same time.

The telescopic arms **200** use telescopic linear guides to make out most of the first part **203** and connect first and the second part **204** together and furthermore the first part to the inner wall of the side compartment. The linear guide is also used to mount the obround chain drive system **209** to the first part.

The telescopic arms **200** can also move toward and away of each other to change the distance between the arms. To achieve this movement both side compartments are connected with at least one ball screw or trapezoidal screw **210** mechanism from underneath the platform **101.** One compartment has two linear bearings **211** that are mounted on linear rails **212** mounted on the other compartment underneath the platform, connecting the two compartments. One of the compartments also has a screw nut **213** that is mounted inside the compartment (Fig. 6.) and supports the screw **210** on this side of the platform. On one end of the screw there is a compartment drive motor **214** inside the motor comprising compartment that turns the screw (Fig. 5). This means that when the screw **210** is turned the compartments move closer to each other or further away from each other thereby providing means to adjust the width of the loading space **106** in between of the arms. The sideways movement of the telescopic arms **200** along with the movement of the side compartments **102** allows the telescopic arm to reach larger or smaller items on the shelf.

At least one of the compartments has a crate guide surface **112** attached to it. This surface supports the crate while it is on the loading space and provides reduction in sliding resistance while the crate is moved onto or off the platform **101.**

At the distal ends of the second parts of the arms there are fixed grippers **215.** These grippers protrude the inside surface of the second part **204.** The grippers move past the crate along with the telescopic arm **200** while it is being extended to grab a crate. When the arms extend past the crate the position of the arm part is confirmed by an encoder of the compartment drive motor **214** and the extending motion will stop. The compartments along with arms will move some distance closer to each other (via turning of the screw **210** as described above) to minimize the crates movement from side to side during crate's moving and then the telescopic arms are retracted to pull the crate onto the platform. Also, the grippers are now positioned behind the crate as they are fixed to the telescopic arm. To move the crate back to the shelf or to the opposite side, the grippers are already at the back of the crate. The arms are extended towards the shelving structure and the crate is pushed back with them. To move the crate/parcel to the same side of the shelving structure the grippers are already at the back of the crate and the crate is pushed onto the shelf with them. The distance between the compartments along with arms mounted thereon is increased and the arms are retracted back to the platform leaving the crate behind.

The platform **101** is wireless, motors and electronics are powered by on board energy source **109.** Energy storage unit is located in one of the side compartments **102.** Platform moves to charging station to autonomously start charging via charging interface **110** when needed.

### List of element numbers

100 shuttle
101 platform
102 side compartments
102a inner wall of the side compartment
103 wheels
104 wheel drive motor
105 driveshaft
106 loading space
107 support rollers
108 belt
109 board energy source
110 charging interface
111 crate
112 crate guide surface
200 telescopic arm
201 arms drive motor
202 splined shaft
203 first part of an arm
204 second part
205 sliding chain sprocket,
217 fixed chain sprocket
206 Second obround chain guide
208 stationary toothed rack
207 toothed rack of first part
209 obround chain drive system
210 ball screw or trapezoidal screw
211 linear bearings
212 linear rails
213 screw nut
214 compartment drive motor
215 grippers
216 bearing housing
217 fixed chain sprocket
218 toothed rack on the second part
300 aisle
301 shelving structure
302 warehouse rail structure

## Claims

1. An unmanned shuttle for automated warehouse systems configured to move along warehouse rail, the shuttle comprising:
a first and a second side compartment (102), each having at least an inner wall (102a) and two end walls (102b),
the first side compartment being a motor comprising compartment and housing an arms drive motor (201), a compartment drive motor (214), and a wheel drive motor (104),
the first and the second side compartments being attached to each other via a splined shaft (202) having a first end connected to the compartment drive motor (214) via a fixed chain sprocket (217) attached to a first obround chain guide (206) attached to a bottom part of the inner wall (102a) of the first side compartment (102), and a second end connected to a splined hub attached to a sliding chain sprocket (205) attached to a second obround chain guide (206) attached to a bottom part of the inner wall of the second side compartment, wherein the splined shaft (202) is configured to be rotated by the compartment drive motor (214) and the sliding chain sprocket (205) is configured to simultaneously slide along the splined shaft, while the fixed chain sprocket (217) at the other end of the splined shaft is configured to turn but not slide;
the inner wall of each side compartment comprising a stationary horizontal toothed rack (208);
two telescopic arms (200) configured to extend in synchrony to two opposite directions;
each telescopic arm comprising a first part (203) and a second part (204),
the first part comprising a toothed rack (207) along its lower edge and an obround chain drive system (209) mounted on its upper edge at a middle of the length of the first part, said toothed rack being in contact with the first or the second obround chain guide (206) attached onto the bottom part of the inner wall of the first or second side compartment respectively, and the first part being configured to extend upon moving the chain around the obround chain guide (206) via turning the splined shaft (202),
the second part (204) comprising a toothed rack on its upper edge and the toothed rack (218) being in contact with the obround chain system (209) on the upper edge of the first part, and the second part configured to extend upon moving a chain around the chain guide of the obround chain system (209) via extending movement of the first part,
wherein at least one of the side compartments comprises a horizontal inward extending crate guide surface (112) configured to provide support for a crate (111) positioned on a loading space (106) between the first and second side compartments (102),
wherein a distance between the first and second side compartments is adjustable via a ball or trapezoidal screw (210) connecting the compartments to each other, and the ball or trapezoidal screw configured to be turned by the compartment drive motor (214),
and wherein the shuttle (100) has at least one wheel (103) in each end wall (102b) of the first and the second compartment (102) and the wheels of the first compartment are connected with a driveshaft (105) and the driveshaft is driven by the wheel drive motor (104) with a belt (108) housed inside the first side compartment.

2. The shuttle system of claim 1, wherein the telescopic arm is configured to extend into two directions perpendicular to driving direction of the shuttle beyond an edge of the loading space and in a fully extended position a length of the arm is more than twice the depth of the loading space.

3. The shuttle system of claim 1, wherein both ends of the second parts comprise a stationary gripper.

4. The shuttle system of claim 1, wherein the telescopic arms have an extension length more than twice the width of the shuttle.

5. A method to transport and store parcels of different sized in an automated warehouse system wherein the method comprises providing the shuttle system according to claim 1, and depending on the size of a parcel to be retrieved by the telescopic arms and transported on the shuttle device a distance between the telescopic arms is adjusted by moving the side compartments closer or further away from each other via the compartment drive motor turning the ball or trapezoidal screw, and by adjusting the extension length of the telescopic arms by the arms drive motor controlling rotation of the splined shaft and thereby extending movement of the first part of the telescopic arms which causes extending movement of the second part.

6. The method of claim 5, wherein the method comprises adjusting the distance between the telescopic arms and the extension length of the telescopic arms such that the arms can simultaneously hold two or more parcels deposited on a same slot in the shelving system.
